Europäisches Patentamt

(19) European Patent Office

Office européen des brevets

(11) Publication number: **0 260 001**
**B1**

## (12) EUROPEAN PATENT SPECIFICATION

(45) Date of publication of the patent specification:
**22.11.90**

(21) Application number: **87307385.2**

(22) Date of filing: **20.08.87**

(51) Int. Cl.⁵: **C08F 240/00,** C08F 8/04,
C09J 157/00

(54) Hydrogenated petroleum resins and their use in adhesives.

(30) Priority: **21.08.86 GB 8620395**

(43) Date of publication of application:
**16.03.88 Bulletin 88/11**

(45) Publication of the grant of the patent: \
**22.11.90 Bulletin 90/47**

(84) Designated Contracting States:
**AT BE CH DE ES FR GB IT LI NL SE**

(56) References cited:
**EP-A- 0 132 291**
**EP-A- 0 149 909**

(73) Proprietor: **EXXON CHEMICAL PATENTS INC., 1900 East Linden Avenue, Linden New Jersey 07036(US)**

(72) Inventor: **Luvinh, Quoc, 119 Avenue des Eperviers, B-1150 Brussels(BE)**
Inventor: **Maroie, Serge Moise Joseph Pierre, 26 Rue de l'Astia, B-6280 Gerpinnes(BE)**
Inventor: **Faissat, Michel, Av. Aphonse XIII 60, B-1180 Brussels(BE)**

(74) Representative: **Bawden, Peter Charles et al, Esso Chemical Research Centre PO Box 1, Abingdon Oxfordshire OX13 6BB(GB)**

**Description**

The present invention relates to new improved hydrogenated petroleum resins and their production. In particular, the invention relates to resins suitable as tackifiers for adhesive formulations particularly hot melt adhesives, hot melt pressure sensitive adhesives and solvent based pressure sensitive adhesives especially those based on ethylene/vinyl acetate copolymers and styrene/butadiene/styrene or styrene/isoprene copolymers and styrene/butadiene multiblock copolymers and aqueous and solvent based acrylate based adhesives.

Petroleum resins obtained by polymerisation of $C_5$ dienes such as pentadiene 1,3 and/or isoprene are well known as is their use as components in hot melt formulations. However, there is a need to improve the adhesive properties of such melts particularly when applied to substrates traditionally difficult to adhere to such as glass and polyethylene. In order for a resin to be useful as a tackifier in adhesive systems, it is necessary that it has the required softening point consistent with the necessary adhesive properties and also good compatibility with the other components of the adhesive system.

Previous techniques have been proposed to improve the adhesive properties of resins by controlling molecular weight during polymerisation such as adding branched olefins, alkyl aromatics and alkyl halides to the polymerisation, see for example United Kingdom Patents 1 538 057 and 1 537 852.

One disadvantage of these earlier techniques is that the presence of the molecular weight controlling additive tends to reduce the softening point of the resin thus rendering it unsuitable for certain adhesives. In addition, they tend to impair the compatibility of the resin with the ethylene/vinyl acetate copolymer and wax normally present in hot melt adhesive systems especially with ethylene/vinyl acetate copolymers of high vinyl acetate content.

It has been proposed in Japanese Patent Application 7 430 489 to include $\alpha$ -pinene for copolymerisation with petroleum resin feeds and French Patent 2 368 504 suggests the inclusion of vinyl-norbornene or tetrahydroindene. It has also been proposed in United Kingdom Patent 2 032 442 that limonene may be copolymerised with $C_5$ olefine and diolefin feeds and European Patent 0 013 060 proposes that carene may be copolymerised with $C_5$ olefin and diolefin feeds. Our European Patent Application 0 132 291 proposes the production of resins with good tackifying properties and softening point by copolymerisation of $C_5$/$C_6$ feeds, a terpene and unsaturated aromatic compounds.

Hydrogenation of petroleum resins is known to improve their colour. For example, our European Patents 0 046 344 and 0 082 726 proposes hydrogenation conditions especially useful for hydrogenation of resins produced by the thermal polymerisation of cyclopentadiene. Similarly United Kingdom Patents 1 413 013, 1 262 050 and 1 447 419 disclose the use of hydrogenated resins derived from feeds containing at least 50 wt. % aromatic olefins in various adhesive compositions. These patents indicate that the degree of hydrogenation of the aromatic ring is important to achieve the desired compatibility with the other components of the adhesive systems. There is no suggestion in these patents that the resins hydrogenated contain terpenes.

We have now found that resins having a particularly desirable combination of properties may be achieved by the hydrogenation of a resin of the type disclosed in our European Patent Application 0 132 291 which are obtained by the polymerisation of a certain amount of a $C_5$ olefin and/or diolefin and/or $C_6$ olefin and/or diolefin feed, a terpene and an unsaturated aromatic compound providing that the mixture copolymerised is substantially free from cyclopentadiene whose presence we find deleteriously affects the properties of the resin.

The present invention provides a process for the production of petroleum resins comprising copolymerising, using a Friedel Crafts catalyst, a mixture of:

(i) 5 to 75 wt.% of a feed comprising $C_5$ olefins and/or diolefins, and/or $C_6$ olefins and/or diolefins or a mixture of $C_5$ and $C_6$ olefins and/or diolefins;

(ii) 5 to 55 wt.% of a terpene, and

(iii) 3 to 55 wt.% of an olefinically unsaturated aromatic compound

said mixture containing less than 2 wt.% of the cyclopentadiene or dicylopentadiene and hydrogenating the resulting product to an extent that at least 20% of the aromaticity of the resulting product remains after hydrogenation having regard to the level aromaticity before hydrogenation.

We prefer that at least 50% of the aromaticity of the resulting product remains after hydrogenation having regard to the original aromaticity level.

The $C_5$ and/or $C_6$ diolefin and/or olefin containing feed used in the process may be obtained from the cracking of petroleum feedstock. Such feedstocks include naphthas, kerosene, gas oil and vacuum gas oil. These feedstocks usually boil in a range of from 20°C to 550°C.

The petroleum feedstock is cracked, preferably in the presence of steam, and the recommended cracking temperature is between 500°C and 870°C. The product which contains unsaturated hydrocarbons usually boiling in the range of 20°C to 240°C, preferably 20°C to 130°C, generally is thereafter subjected to fractionation to remove $C_2$ to $C_4$ light ends. If the feedstock contains large amounts of cyclopentadiene it should be subjected to thermal soaking at a temperature between 100°C and 160°C, preferably 110°C to 140°C. The thermal soaking preferably takes 0.5 hour to 6 hours, e.g. 0.5 to 3 hours to reduce the level of cyclopentadiene or dicyclopentadiene to below 2 wt.%. Low temperature heat soaking is preferred in order to limit the cyclic diene (cyclopentadiene and methylcyclopentadiene) co-dimerisation with $C_5$ linear conjugated dienes (isoprene and pentadienes 1,3 cis- and trans-). After fractionation and, if carried out, thermal soaking, the feedstock is preferably subjected to distillation to remove cyclic conjugated diolefins which are gel precursors (cyclopentadiene and methylcyclopentadiene being removed as dimers).

After distillation one obtains an overhead naphtha which usually boils in the range from 15°C to 100°C, e.g. 25°C to 80°C, the best results being achieved with 25-70°C cut. This overhead naphtha comprises mainly $C_5$ diolefins such as isoprene and 1,3 cis- and transpentadienes (piperylene), $C_5$ to $C_6$ mono-olefins and aromatics, for example, benzene. In general the overhead naphthas have the following compositions:

|  | % By Weight |
|---|---|
| Total paraffins | 1.0 to 41.5 |
| Total diolefins | 50.0 to 14.5 |
| Total olefins | 33.5 to 13.0 |
| Total aromatics | 20.0 to 35.0 |
| Isoprene | 16.5 to 6.5 |
| Pentadiene 1,3 | 15.5 to 4.5 |

The exact composition depending on the nature of the petroleum feedstock which is subjected to steam cracking. Cyclopentene contents are generally below 3.0 wt.%. These feeds contain materials such as paraffins and aromatics which are not polymerised during the process of the invention and it is emphasised that these materials are not considered to be part of the reaction mixture for the purposes of this invention.

The feed could be significantly isoprene-free provided this compound is previously recovered through any conventional separation process such as distillation, extractive distillation or azeotropic distillation. In this case, the feed may be a narrow fraction pentadiene 1,3 concentrate. A typical such composition contains less than 5 wt.%, preferably less than 2 wt.% isoprene, from 25 to 80 wt.% pentadiene 1,3 (cis- and trans-isomer). Other $C_5$ and/or $C_6$ olefins, and/or diolefins making up the remainder, generally cyclopentene, typically 75 to 10 wt.%.

The $C_5/C_6$ feed comprises 5 to 75 wt.% of the total unsaturated materials in the process of the present invention.

The terpene feed used in the present invention may be $\alpha$ -pinene, $\beta$ -pinene, carene, limonene or other readily available terpinous materials, $\alpha$ -pinene and limonene being preferred. The material may be pure or the commercially available concentrates such as gum terpentine or $\alpha$ -pinene concentrates may be used, which tend to be mixtures of various terpinous materials. For example, a suitable feed contains from about 70 to 95 wt.% $\alpha$ -pinene, the remainder being other terpenes. Limonene streams are available containing above 50 wt.%. Generally 50 to 70 wt.% limonene and carene streams are available containing from 50 to 85 wt.% $\Delta$ -3 carene. These are typical streams useful in the present invention. Where limonene is used, it is preferred that the $C_5/C_6$ unsaturated feed contain a high proportion of olefins since if large amounts of diolefins are present, the molecular weight of the product tends to be too high with reduction in adhesive properties and compatibility. Preferably, the $C_5/C_6$ feed contains at least 10 wt.%, more preferably at least 20 wt.% of olefins. We prefer to use from 15 to 35 wt.% of the terpene.

The olefinically unsaturated aromatic compounds useful in the present invention may also be used in its pure form or as mixtures of unsaturated aromatics such as those available from the cracking of petroleum materials. Examples of suitable unsaturated aromatics include styrene, $\alpha$ -methyl styrene, indene and vinyl toluene and mixtures thereof. Here again, where mixtures are used, reference to the percentage is to the amount of unsaturated polymerisable aromatic material based on the total weight of unsaturated material fed to the reactor. We prefer to use from 10 to 45 wt.% of the unsaturated aromatic compound.

We have found that the combination of using the three ingredients of the stream in the proportions proposed leads to significantly improved resin properties. When unsaturated aromatics such as styrene are copolymerised with $C_5$ feeds, the result is an undesirable lowering of the softening point of the resin, even though an improvement in adhesive properties is achieved. We have found, however, that if the terpene is also included, the improvement in the adhesive properties may be retained without the dramatic reduction in softening point. Such improvement has been found to enable the tackification of hitherto difficult to tackify rubbers, particularly the styrene/butadiene/styrene block copolymers such as the commercially available products Cariflex (Registered Trade mark) 1101 and 1102 and to result in improved adhesive properties in hot melt adhesives containing ethylene vinyl acetate copolymers, especially those with high vinyl acetate content, and wax on substrates such as glass and aluminium together with improved compatibility with the other components of the hot melt adhesive system.

In addition, the resins of the present invention have been found to have low colour and good heat stability. Further, the process has a high yield, about 40 wt.% and sometimes as high as 75 wt.% or higher.

Agents to narrow the molecular weight distribution may be employed in the production of the resins, for example, the branched chain reactive aliphatic olefins of our GB patent 1 538 057 may be used to achieve narrow distribution. These olefins may make up part of the $C_5/C_6$ feed and the amount of branched olefins used may be varied to obtain resins of any desired softening point within the range 50°C to 140°C. We prefer to use up to 50 wt.% based on the total weight of unsaturated compounds of these olefins. Where branched olefins are used, a broad (e.g. $C_5$-$C_8$) fraction of our U.K. patent 538 057 may be used. The preferred branched chain reactive aliphatic olefins are oligomers of propylene and butylenes obtained with phosphoric acid catalysts or from a Fluid Catalytic Cracker.

Other chain transfer agents such as the alkyl halides of our U.K. patent 1537852 may also be used optionally as part of the catalyst system.

Similarly, oxygenated transfer agents may be used such as mono-, di- or tri-substituted phenols, the substitution being a $C_1$ to $C_{30}$ or preferably $C_1$ to $C_6$ straight chain or branched chain hydrocarbyl group, e.g. methyl, ethyl, propyl, butyl, amyl or their secondary or tertiary isomers (e.g 2,6 ditertiary-butyl-4-methyl phenol), alcohols, esters, dialkyl ethers, alkaryl ethers, and alkyl group in the ether being $C_1$ to $C_6$ straight or branched chain hydrocarbyl group, e.g. methyl, ethyl, amyl or their secondary or tertiary isomers, (e.g. anisole), organic acids or anhydrides (e.g. maleic anhydride). When used, the oxygenated transfer agent should preferably have a boiling point lower than 300°C. If low boiling point compounds, e.g. diethyl ether, are used, the polymerisation temperature and pressure should be carefully chosen so as to maintain them in the liquid state.

The most efficient compounds in the presence of $AlCl_3$ are dialkyl ethers or an alkaryl ether, such an anisole, since they act as solvents for the catalysts. Since the polymerisation is usually carried out between 30°C to 80°C, any such additive should be of adequate boiling point in order to maintain it in the liquid phase.

The amount of oxygenated compound used as transfer agent can vary from 0.1 to 5 wt.%, preferably 0.5 to 2 wt.%, based on the weight of petroleum resin feed. They are generally less attractive than the branched chain reactive aliphatic olefins previously described.

The feeds are mixed and polymerised using a Friedel Crafts catalyst, for example, aluminium chloride, aluminium bromide or an aluminium chloride/hydrochloric acid/aromatic hydrocarbon complex or aluminium chloride/alkyl halide/aromatic hydrocarbon complex, the aromatic hydrocarbon being preferably alkyl substituted, for example, 0-xylene, mesitylene, ethyl benzene, isopropyl benzene and other short or long chain mono-, di- or tri-alkyl benzenes are especially suitable. The alkyl chain can be linear or branched and can vary from 1 to 30 carbon atoms.

Acid liquid $AlCl_3$ sludges obtained as by-products during the alkylation of benzene or any other substituted aromatics (e.g. toluene or xylene) with branched chain olefins can be directly used as catalyst for the above described polymerisation process. The branched chain olefins which are, for example, produced via the boron trifluoride oligomerisation of propylene and fractionation, e.g. $C_{12}$ olefins or $C_{24}$ olefins, can be alkylated with aromatics producing in situ sludge. As an example, the acidic sludge available from a dodecylbenzene plant provided similar results to the preformed 0-xylene $AlCl_3$/HCl liquid complex sludges from other substituted branched or straight chain aromatic production, for example, meta and/or para di-isopropyl benzenes and para-tertiary butyl benzene may also be used.

These liquid complexes are slightly more efficient than $AlCl_3$ powder at equivalent concentration and provide slightly higher resin yields and lower resin molecular weight.

In the polymerisation process, the amount of catalyst may vary from 0.25 to 3.0 wt.%, preferably 0.5 to 1.5 wt.% based on the weight of the mixture to be polymerised. The optimum concentration depends on the nature of the solvent which affects the solubility of the catalyst as well as on the stirring efficiency inside the polymerisation reactor.

Other Friedel Crafts catalysts like titanium tri- or tetra- chloride, tin tetrachloride, boron trifluoride, boron trifluoride complexes with organic ethers, phenols or acids can also be used but they lead to rather low resin yields and large quantities of liquid oligomers of low value are obtained. Even though these oily oligomers can be upgraded as reactive plasticizer or liquid plasticizer, such catalysts are not recommended. Other possible catalysts can be acidic clays.

Usual polymerisation temperatures are between –20°C and 100°C, preferably between 30°C and 80°C, we find that if lower temperatures are used, the resin colour is improved although there can be a reduction in yield.

After polymerisation, the residual catalyst may be removed by, for example, washing with aqueous solution of alkali, ammonia or sodium carbonate, or by the addition of an alcohol such as methanol and subsequent filtration.

The final resin may be stripped of unreacted hydrocarbons ("raffinate" rich in benzene and/or paraffins/unreactive olefins) and low molecular weight oligomers by stream stripping or vacuum distillation.

The finished resin usually has a softening point of from 60°C to 125°C, preferably 70°C to 110°C.

The resins prepared as described above contain both aromatic and aliphatic unsaturation and may be hydrogenated by any suitable technique which removes the aliphatic unsaturation and leads to the required degree of hydrogenation of the aromaticity in the resin.

The hydrogenation may be batch or continuous. Typical examples of catalysts include nickel, palladium, platinum and molybdenum sulphide Ni-W, Ni-Mo, Co-Mo catalysts with a preferred catalyst being a pre-activated catalyst on a support such as alumina, kieselguhr, activated charcoal, silica, silica alumina and titania.

Before carrying out hydrogenation, the resin is preferably dissolved in a saturated hydrocarbon solvent. Typical batch hydrogenation takes place at a temperature of 100°C to 260°C and for preference from 120°C to 200°C, at a pressure of 10 to 120 atmospheres (10 · 13 bar to 121 · 56 bar), and for preference, from 20 to 90 atmospheres (20 · 26 bar to 91 · 17 bar) for a period of 5 to 16 hours. Typical catalysts are nickel, palladium, platinum deposited on an inert support like alumino or silica. Suitable proportions of catalysts are from 0.5 to 15 wt.%, and for preference from 1 to 10 wt.%, in relation to the resin. After filtering off the catalyst, the solvent is removed by distillation and recovered for recycling.

We prefer, however, to use a continuous hydrogenation process in which a solution of the resin in a suitable hydrocarbon solvent is passed with an excess of hydrogen or hydrogen rich gas over a catalyst, preferably Ni-W, Ni-Mo or Co-Mo catalyst on a gamma alumina support, such as described in our European Patents 0046634 and 0082726. Typically, the preferred Ni-W or Ni-Mo have a specific fresh surface area ranging from 120 to 300 m²/g and containing from 2 to 10% weight nickel and from 10 to 25% by weight tungsten, or from 2 to 10% by weight nickel and from 10 to 25% by weight molybdenum or from 2 to 4% by weight cobalt and from 10 to 15% by weight molybdenum wherein the catalyst support has (preferably) pores or channels having radii in the range of $10^{-7}$ to $75.10^{-7}$m (1000 to 75 000 A) comprising at least 10% of the total pore volume. The preferred components are nickel and tungsten on a gamma alumina support. The concentration of metals on the catalyst is important for good performance and ranges from 2 to 10, preferably 4 to 5, wt.% nickel and from 10 to 25, preferably 16 to 20, wt.% tungsten.

Typical conditions are:

1) resin dilution typically from 10 to 50 wt.% in a suitable hydrocarbon solvent such as Exxsol D40 (Registered Trade Mark or Varsol 40 Registered Trade Mark);

2) liquid space velocity (VVH: volume of feed per volume of catalyst per hour) typically from 0.1 to 5, preferably 0.5 to 3;

3) gas ratio at reactor outlet (volume of hydrogen per volume of feed) between 50 and 300, most generally around 200;

4) reaction temperature selected from 180°C to 350°C, preferably 200 to 320°C;

5) reactor is a trickle bed type, operated either upflow or downflow;

6) hydrogen pressure from 20 to 250 atmospheres (20.26 to 253.25 bar), preferably between 40 and 180 atmospheres (40.52 to 182.34 bar).

The typical hydrogenation/decolourisation conditions specified above are exemplary of those useful for commercial practice, but should not be considered restrictive. As hydrogen partial pressure and total pressure are increased, one would expect the values of the other process variables to change, for a given finished resin colour. For example, temperatures might be lowered, or feed resins concentrations increased, or reactor space velocity may be increased. Alternatively, pressure and/or temperature may be increased as a means of reducing finished resin colour and/or residual unsaturation as measured by bromine number or bromine index. They may also be varied to control the aromatic content of the resins. It has been found that pressures in excess of 120 atmospheres (121.56 bar), as taught in U.K. Specification No. 1 202 802 are required for substantial reduction in residual resin unsaturation and/or heat stability.

After hydrotreating, the mixture from the reactor may be flashed and further separated to recover the solvent and hydrogen for recycle and to recover the hydrogenated resin. The solution is flashed and/or distilled in an oxygen-free or minimum oxygen atmosphere to eliminate the solvent, and thereafter, may be steam distilled to eliminate the possible light oily polymers of low molecular weight, known in the trade by name of "fill", preferably with care not to raise the temperature of the resin above 325°C to avoid degrading the colour and other properties of the finished resin.

The liquid polymeric resin is cast and crushed after cooling. Alternatively, it may be pastillated, prilled or flaked.

Resins are thus obtained having a Gardner colour in the region of 1 to 3 down to a Saybolt colour of 30+, a ball-ring softening point of about 50 to 150°C and a high degree of tackiness. These properties, together with other such as brilliance, compatibility with other resins, and solubility in usual solvents, enable them to be used in making many products used by the most varied industries; viz. adhesives of all kinds, varnishes and paints, and for the treatment of cellulose materials.

The present invention further provides a resin comprising a hydrogenated derivative of a copolymer containing from 5 to 80 wt.% of units derived from an olefinically unsaturated aromatic compound from 5 to 80 wt.% of units derived from $C_5$ olefins and/or diolefins and/or $C_6$ olefins and/or diolefins or a mixture of $C_5$ and $C_6$ olefins and/or diolefins – and from 7 to 45 wt.% of units derived from a terpene.

Hydrogenation improves the colour and the heat stability of the resin by removing the chromophores and reducing the olefinic unsaturation which is preferably reduced to below 0.02 double bonds per 100 grams of resin as measured by reacting the resin with metachloroperbenzoic acid. In this method, 0.1 grams of the resin is dissolved in 10 g toluene and treated with an excess of a freshly standardized ethylacetate solution of metachloroperbenzoic acid and allowed to stand overnight in the dark at room temperature. On the following day, an excess of potassium iodide solution is added to react with the unreacted metachloroperbenzoic acid and the iodine liberated by the excess peracid is determined by back titration with sodium thiosulphate solution. The amount of peracid reacting gives the double bond content of the resin. A blank is run concurrently to determine the extent of peracid decomposition whilst standing overnight.

The hydrogenation may also reduce the aromatic content which may readily be determined by proton NMR, for example, the hydrogenation reduces the aromatic content to provide a first aromatic content between 3 to 75%.

For optimum use in hot melt adhesive formulations, we prefer that the resins have softening points in the range from 60°C to 125°C, preferably 75°C to 115°C, more preferably 90°C to 105°C and have a number average molecular weight of from 300 to 1500 as measured by GPC.

The resins obtained can be used in many applications which require low viscosity, good flexibility and elongation before or especially after chemical modification with polar compounds such as phenols, unsaturated anhydrides such as maleic anhydride or unsaturated acids (e.g. fumaric acid). These resins are designed for a wide range of end uses and applications. They can be applied to paper, metal, thermoplastic films Cellophane (Registered Trade Mark), polyester, PVC, woven or non-woven fabrics, glass, etc. and for bonding such materials together. Typical applications are hot melts, carpet backing, coating with drying oil formulations, book binding, paper sizing or in any applications involving natural or synthetic resins and/or rubbers such as caulks, sealants or rubber tackification. More especially they may be used as tackifiers with natural rubber or synthetic resins and/or rubbers such as caulks, sealants or rubber tackification. More especially they may be used as tackifiers with natural rubber or synthetic rubbers such as polyisoprene, EPDM, butyl, chorobutyl, bromobutyl, neoprene and block copolymers, for example, styrene/isoprene rubber (Shell Cariflex (Registered Trade Mark) TR1107) mixtures of such rubbers, butadiene/styrene copolymer, multiblock butadiene styrene copolymers and polyacrylate water and solvent based adhesives.

Other applications involving such resin properties are pressure sensitive adhesives, hot melt adhesives, hot melt pressure sensitive adhesives, low temperature adhesives, label adhesives, latex adhesives, surgical tapes and masking tapes where they may be blended with polymers such as ethylene/vinyl acetate copolymers and optionally with wax.

The present invention is illustrated but in no way limited by reference to the following examples in which the following feeds are used:

## $\alpha$ -pinene concentrate

wt. %

| | |
|---|---|
| $\alpha$ -pinene | 90.34 |
| Camphene | 4.19 |
| $\beta$ -pinene | 0.21 |
| $\Delta$- 3 carene | 0.11 |
| $\beta$ -terpinene | 0.67 |
| $p$ -cymene | 0 |
| Limonene | 2 |
| $\alpha$ -terpinene | 0.34 |
| Terpinolene | 0.87 |
| 2,4,8-mentadiene | 0.11 |
| Unknown | 1.16 |
| Total polymerisable | 98.84 |

## Carene Concentrate
### G.C. Analysis

Wt. %

| | |
|---|---|
| $\alpha$ -pinene | 4.01 |
| Camphene | 1.67 |
| $\beta$ -pinene | 12.36 |
| $\Delta$- 3 carene | 60.82 |
| $\alpha$ -terpinene | 1.57 |
| $p$ -cymene | 1.73 |
| Limonene | 9.05 |
| $\beta$ -terpinene | 0.76 |
| Terpinolene | 1.75 |
| 2,4,8-mentadiene | 0.16 |

7

## Piperylene Concentrate

| | |
|---|---|
| Isoprene | 1.17 |
| Pentene-2 trans. | 1.6 |
| Pentene-2 cis. | 3.45 |
| 2 Me-butene-2 | 3.59 |
| Pentadiene 1,3 trans. | 43.36 |
| CPD | 0.59 |
| Pentadiene 1,3 cis. | 23.55 |
| 1,2 dimethylbutane | 0.38 |
| Cyclopentane | 14.99 |
| 4 methylpentene-1 ) | |
| ) | 0.56 |
| 3 methylpentene-1 ) | |
| 3 methylpentadiene 1,4 ) | |
| 4 methylpentadiene-2 cis. ) | 0.17 |
| 2,3 dimethylbutene-1 ) | |
| Cyclopentane | 1.58 |
| 4 methylpentene 2 | 0.06 |
| 2 methylpentane | 0.22 |
| 3 methylpentane | 0.03 |

The concentrates described above were mixed with pure vinyl aromatic compound and a paraffinic solvent in the proportions set out in the following Table 1. The mixture was then polymerised at 50°C using 1 wt.% AlCl₃ as catalyst. The conditions used were as follows:

The reaction mixture (as described in Table 1) was fed to a 2 litres glass reactor which was fitted with a mechanical stirrer, a cooler and a catalyst injection device. 1 wt.%. of powdered AlCl₃ as catalyst based on the total weight of the feed was injected into the reactor which was then held at 50°C-60°C for 90 minutes. As ammonia solution was added to stop the reaction after the desired reaction time. The resin was then obtained after stream stripping at 250°C under nitrogen atmosphere.

The solvent used contains:

paraffins 97 wt.%
aromatics 0.5 wt.%
diolefins, olefins balance

In Examples 1 to 3, the resins obtained were then hydrogenated in an adiabatic continuous tubular trickle bed reactor operated in the dowflow mode.

Using a NT 555 E (wide pore size distribution, 1.59mm (1/16 inch) extrudate) catalyst purchased from Katalco in the inactive nickel oxide tungsten trioxide on gamma-alumina form which is converted to the catalytically active form by sulphidation. Sulphur is added in Varsol (Registered Trade Mark) 40 either as carbon disulphide or dimethyl disulphide, the hydrogen pressure during the activation being in the range of 20–40 atm (20.46 to 40.92 bar). The initial temperature is 200°C for removal of absorbed water, which is then raised to 300–350°C and kept for 39–65 hours.

In the Examples, the olefinic unsaturation of the resins was measured by the peracid treatment process previously described.

## EXAMPLE 1

The hydrocarbon resin is dissolved in Exxsol D40, at 30 wt.% resin and then hydrogenated using a hydrogen pressure of 180 atmospheres (182.34 bar), a liquid space velocity (VVH) of 1.5, a ratio of volume of gas at reactor exit of 200 volume of hydrogen to resin solution with a reactor inlet temperature between 215°C and 230°C. After hydrogenation, the product is steam stripped.

The properties of the resins obtained before and after hydrogenation are set out in the following Table 1. After hydrogenation the resins show no residual aliphatic unsaturation.

TABLE 1

| Sample References | 1 | 2 | 3 | 4 | 5 |
|---|---|---|---|---|---|
| Alpha-pinene | 36 | → | 31 | → | 31 |
| Piperylene | 22 | → | 24 | → | 19 |
| Para-methyl styrene | 17 | → | 20 | → | — |
| Styrene | | | | | 30 |
| LVN | 25 | → | 20 | → | 20 |
| $C_5$ olefins | | | 5 | | |
| Resin yield | 48 | | 53 | | 58 |
| Fill yield | 14.5 | | 12 | | 12 |
| Softening point (°C) | 112 | | 106.5 | | 94.5 |
| Gardner colour ** | 3 | | 3 | | 3.5 |
| Wax cloud point | 89 | | 88 | | 88 |
| Mn (GPC) | 850 | | 670 | | 750 |
| Mw | 1870 | | 1790 | | 1750 |
| Aromatic content (NMR) weight % | 24 | | 25.5 | | 42 |
| Sulphur (ppm) | 24 | | 32 | | 30 |
| Chlorine (ppm) | 100 | | 110 | | 50 |
| Heat stability Gardner colour 3 hours 150°C | 4 | | 4 | | 5+ |
| 16 hours 150°C | 7.5 | | 8 | | 8.5 |
| Aliphatic unsaturation | | | | | 0.03 |
| _After Hydrogenation_ | | | | | |
| Resin, wt.% before $H_2$ | 30 | 30 | 30 | 30 | 30 |
| after $H_2$ | 29.3 | 28.9 | 29.4 | 28.5 | 29 |
| Softening point (°C) | 103 | 106.5 | 96.5 | 100 | 95 |
| Colour, Saybolt* | 30 | 30 | 30 | 30 | 30 |
| Wax cloud point | 89 | 89 | 89 | 89 | 89 |
| Mn (GPC) | 830 | 850 | 780 | 820 | 790 |
| Mw | 1680 | 1690 | 1610 | 1650 | 1690 |
| Aromatic content (NMR) weight % | 22 | 22 | 22 | 22 | 30 |
| Sulphur (ppm) | <1 | <1 | <1 | <1 | <10 |
| Chlorine (ppm) | 9 | 15 | 12 | 3 | 3 |
| Heat stability Gardener colour ( 5 hours 175°C, 0.3 wt.% Irganox 1076) | 2.5 | 2 | 3.5 | 3 | <1 |
| Aliphatic unsaturation | | | | | 0.002 |

\* 10 wt.% solution in toluene
\*\* 50 wt.% solution in toluene
\*\*\* Hydrogenation reactor inlet temperature respectively 226°C for 1 and 2, 222°C for 3 and 4, 217°C for 5, 230°C for 6 and 7.
In samples 2, 4 and 7, severe stripping conditions were used, employing 3 times the amount of steam.

EP 0 260 001 B1

| Feed Composition | 6 | 7 |
|---|---|---|
| Carene | | |
| Alpha-pinene | 15 | → |
| Piperylene | 30 | → |
| Para-methyl styrene | | |
| Styrene | 15 | → |
| LVN | | |
| UOP olefins | 40 | → |
| Resin yield | 45 | |
| Fill yield | 20.5 | |
| Softening point (°C) | 71 | |
| Gardner colour | 3 | |
| Wax cloud point | 88 | |
| Mn (GPC) | 720 | |
| Mw | 1290 | |
| Aromatic content (NMR) weight % | 23 | |
| Sulphur (ppm) | <10 | |
| Chlorine (ppm) | 150 | |
| Heat stability Gardner colour 3 hours 150°C | 5.5 | |
| 16 hours 150°C | | |
| After Hydrogenation | | |
| Resin, wt.% before $H_2$ | 30 | 30 |
| after $H_2$ | 29.5 | 28.5 |
| Softening point (°C) | 65 | 67 |
| Colour, Saybolt | 30 | 30 |
| WCP | 88 | 88 |
| Mn (GPC) | 840 | |
| Mw | 1080 | |
| Aromatic content (NMR) weight % | 18.5 | |
| Sulphur (ppm) | 5 | |
| Chlorine (ppm) | 14 | |
| Heat stability Gardner colour 5 hours 175°C | 2 | 2+ |

Wax cloud point measured in following blend:
28% V.A.: EVA 220 30; Resin 45; Microwax 25

The resins were tested as tackifiers for hot melt pressure sensitive adhesives based on Shell styrene/butadiene/styrene copolymers SBS TR 1102 of the following composition:

TR 1102  100 parts
Resin  125 parts
Primol® 25 parts
Irganox® 1010  2.5 parts

The Primol is a processing oil reducing the viscosity of the formulation and Irganox 1010 is an antioxidant.

10

| Sample Reference | 1 Before hydrogenation | 1 Hydrogenated | 3 Before hydrogenation | 3 Hydrogenated |
|---|---|---|---|---|
| Ball tack (cm) | 2 | 2 | 2 | 2 |
| 180° peel strength (gr/cm) | 610 | 620 | 605 | 510 |
| Loop tack (N/25.4 mm) | 15 | 15 | 17.5 | 14 |
| Hot shear (°C/min) | 70/16 | 70/22 | 70/16 | 70/21 |
| Viscosity at 175°C (cps) (1cp ≡ 1mPas) | 34 500 | 32 750 | 34 500 | 31 250 |

The Ball Tack is measured by the PSTC-6 Test.

180° Peel Strength is measured by the PSTC-1 Test.

The Loop Tack is measured by the FINAT-9 Test.

The Viscosity is measured by the ASTM D-3236 Test.

The Hot Shear is measured by suspending a 1000 gram weight of a 25 millimeter wide strip of Mylar coated with the adhesive formulation which is adhered to a stainless steel plate with a contact area of 12.5 mm x 25 mm.

The sample is placed in a ventilated oven at 40°C whose temperature is increased every 30 minutes by 10°C until stress failure occurs and the temperature of failure and the time at that temperature to failure are recorded.

The hydrogenated product of Sample 6 was tested as a tackifier for solvent based acrylic polymer in an adhesive containing 20% resin/80% acrylate and compared with an adhesive containing 100% acrylate with the following results:

| Properties | 20% Resin 80% Acrylate | 100% Acrylate |
|---|---|---|
| Peel strength (gr/cm) | 465 | 355 |
| Loop Tack on PE (N/25.4 mm) | 3 | 1.7 |
| Loop Tack on Stainless steel (N/25.4 mm) | 5.1 | 4.5 |

EXAMPLE 2

The unhydrogenated resin of Sample 5 was hydrogenated using the conditions shown in Table 2 to give the resins of the properties set out in Table 2.

11

TABLE 2

| PROCESS PARAMETERS | | | | | | | | | |
|---|---|---|---|---|---|---|---|---|---|
| Resin concentration (wt.%) | 30 | 30 | 30 | 30 | 30 | 30 | 30 | 30 | 30 |
| Hydrogen pressure 180 atm (182.34 bar) in all cases | | | | | | | | | |
| Gas ratio at reactor (outlet) | 200 | 200 | 200 | 200 | 200 | 200 | 200 | 200 | 200 |
| Space velocity (vol. feed/vol. catalyst/hour) | 1.5 | 1.5 | 1.5 | 1.5 | 1.5 | 1.5 | 1.75 | 2 | 3 |
| Reactor Inlet temperature (°C) | 217 | 227 | 217 | 241 | 207 | 227 | 226 | 227 | 226 |
| Reactor peak maximum temp. (°C) | 267 | 277 | 257 | 295 | 237 | 258 | 255 | 256 | 257 |
| Resin yield (% of recovery) | 99 | 97 | 98.6 | 94 | 98.6 | 99.6 | 97.5 | 98 | 98.3 |
| Aliphatic unsaturation | 0.03 | 0.03 | 0.03 | 0.03 | 0.03 | 0.03 | 0.03 | 0.03 | 0.03 |
| HYDROTREATED RESIN PROPERTIES | | | | | | | | | |
| Resin softening point (°C) | 95 | 94 | 96 | 93 | 95 | 92 | 90 | 93 | 95 |
| Colour (Saybolt) | 30 | 30 | 30 | 30 | 30 | 28 | 28 | 25 | 25 |
| Chlorine content (ppm) | 3 | 3 | 3 | 3 | 2 | 6 | <1 | <1 | 7 |
| Sulphur content (ppm) | 6 | 1 | 4 | 1 | 14 | <1 | <1 | <1 | <1 |
| Heat stability (Gardner) * 5 hours, 175°C (Inhibitor: 0,3% Irganox 1076) | <1 | <1 | 1 | <1 | 1 | 2 | 2.5 | 4 | 7 |
| Aromatic content (NMR) weight % | 30.2 | 28.5 | 35.1 | 27.2 | 38.3 | 35.7 | 37.0 | 38.1 | 38.2 |
| Aliphatic unsaturation | 0.002 | | | 0.0005 | | | | | |

\* 50 wt.% solution in toluene

The first of these products was tested as a tackifier in the following pressure sensitive adhesive formulation:

| Cariflex TR 1102 rubber | 100 parts |
|---|---|
| Resin | 125 parts |
| Primol | 25 parts |
| Irganox 1010 | 2.5 parts |

with the following results:

| Viscosity at 175°C, mPas | 40 000 |
|---|---|
| Rolling ball tack, cm | 1.5 |
| Loop tack, N/25.4mm | 15 |
| 180° peel adhesion, g/cm | 540 |
| Hot shear, °C/min | 70/20 |
| Shear adhesion failure temperature, °C | 78 |
| Pick-up, g/m$^2$ | 21 |

They were also tested in the following pressure sensitive adhesive formulation:

| Butadiene/styrene multiblock copolymer (Stereon 840A®) | 100 parts |
|---|---|
| Resin | 125 parts |
| Primol | 25 parts |
| Irganox 1090 | 2.5 parts |

The Shear Adhesion Failure Temperature is determined by using the formulation to adhere a 2.54 cms × 1.27 cms polyethylene strip to stainless steel, hanging the samples in an oven held at 25°C and suspending a 500 grm weight from the bottom of the strip. The temperature is raised 0.4°C/minute and the bond failure temperature is measured. The Shear Adhesion Failure Temperature is the average of three tests.

With the following results:

| Resin | |
|---|---|
| Viscosity at 175°C, mPas | 19 500 |
| Rolling ball tack, cm | 2 |
| Loop tack, N/25.4 mm | 22 |
| 180° peel adhesion, g/cm | 640 |
| Hot shear, °C/min | 70/14 |
| Shear Adhesion Failure Temperature, °C | 81 |
| Pick-up, $g/m^2$ | 21 |

They were also tested in the following hot melt adhesive formulation:

| Ethylene/vinyl acetate copolymer (UL 02528) | 45 parts |
|---|---|
| Paraffin wax (68°C softening point) | 10 parts |
| Resin | 45 parts |
| Irganox 1076 | 0.5 parts |

with the following result:

| Viscosity at 180°C, mPas | 13 500 |
|---|---|
| Softening point | 78 |
| Cloud point (°C) | <70 |
| Heat stability: colour (Gardner)/skinning (%) Initial | 2.0 |
| 25 hours, 180°C | 8–0 |
| 50 hours, 180°C | 10.5–0 |
| T-peel on Al, g/cm (Test ASTM D 1876) | 850 |
| T-peel on PE, g/cm (Test ASTM D 1876) | 400 |
| Hot shear, c/min | 60/30 |

EXAMPLE 3

Similar tests were carried out using lower hydrogenation pressures on the following polymer:

| Resin S.P. (°C) | 93.5 |
|---|---|
| Resin colour (Gardner) | 4 to 4+ |
| Aromatic content (NMR) weight % | 48 |
| Chlorine content (ppm) | 80 |
| Sulphur content (ppm) | – |

to give the following results (Table 3):

TABLE 3

| PROCESS PARAMETERS | | | | | | | |
|---|---|---|---|---|---|---|---|
| Resin concentration (wt.%) | 30 | 30 | 30 | 30 | 15 | 15 | 15 |
| Hydrogen pressure 40 atm (40.52 bar) in all cases | | | | | | | |
| Gas ratio at reactor outlet | 200 | 200 | 200 | 200 | 200 | 200 | 200 |
| Space velocity (vol. feed/vol. catalyst/hour) | 1.0 | 1.0 | 1.0 | 1.5 | 1.0 | 1.0 | 1.5 |
| Inlet temperature (°C) | 225 | 240 | 250 | 235 | 235 | 249 | 250 |
| Peak temperature (°C) | 249 | 265 | 280.5 | 259 | 253 | 268 | 267 |
| Resin yield (% of recovery) | 98 | 97.6 | 96.6 | 98.0 | 96.6 | 96.6 | 96.6 |
| HYDROTREATED RESIN PROPERTIES | | | | | | | |
| Resin SP (°C) | 93 | 90.5 | 89 | 91.5 | 91 | 90 | 90 |
| Colour (Saybolt) | 24 | 25 | 25 | 25 | 30 | 30 | 30 |
| Chlorine content (ppm) | 4 | 2 | 2 | 1 | <1 | 2 | 5 |
| Sulphur content (ppm) | 1 | <1 | <1 | <1 | <1 | <1 | 7 |
| Heat stability (Gardner) * 5 hours, 175°C (Inhibitor: 0,3% Irganox 1076) | 4 | 4 | 4 | 5 | 2 | <1 | 2 |
| Aromatic content (NMR) weight % | 40.3 | 40.5 | 41.9 | 39.8 | 41.2 | 40.7 | 41.1 |
| Aliphatic unsaturation | | 0.006 | | | | | |
| * 50 wt.% resin solution in toluene | | | | | | | |

EXAMPLE 4

Batch hydrogenations were carried out on a 30 wt.% resin solution Exxsol D 40 solvent using Ni and Pd catalysts. The resin had the following properties:

| | |
|---|---|
| Resin SP (°C) | 93.5 |
| Resin colour (Gardner) | 4/4+ |
| Aromatic content (NMR) | 48 |
| Chlorine content (ppm) | 80 |

Using the conditions set out in Table 4 to give the results shown in Table 4:

14

TABLE 4

| HYDROGENATION CONDITIONS | | | | | | | | | |
|---|---|---|---|---|---|---|---|---|---|
| Catalyst, wt.% | a, 1.2 | a, 2.5 | a, 2.5 | a, 1.2 | b, 1.0 | b, 1.0 | b, 1.0 | b, 2.5 | b, 2.5 |
| Batch Temperature (°C) | 150 | 120 | 150 | 170 | 124 | 150 | 180 | 160 | 142 |
| Batch Time (hours) | 5 | 5 | 5 | 16 | 5 | 5 | 5 | 16 | 16 |
| H$_2$ Pressure in atm. Bar values in brackets | 70 (70.91) | 70 (70.91) | 40 (40.52) | 70 (70.91) | 40 (40.52) | 20 (20.26) | 73 (73.95) | 41 (41.53) | 43 (43.56) |
| Stirring Rate (RPM) | 1000 | 1000 | 1000 | 1000 | 1000 | 1000 | 1000 | 1000 | 1000 |
| RESIN PROPERTIES AFTER HYDROGENATION | | | | | | | | | |
| Resin Yield % | 98.7 | 99.1 | 100 | 100 | 98.7 | 98.5 | 100 | 99.7 | 98.3 |
| Softening Point (°C) | 96 | 96 | 100 | 102 | 98 | 97 | 100 | 102 | 100 |
| Colour, Saybolt | 28 | 28 | 30 | 30 | 20 | 23 | 29 | 29 | 27 |
| Aromatic Content, (NMR) weight % | 45.2 | 43.5 | 31 | 20.4 | 41.9 | 45.1 | 25.7 | 17.4 | 23.1 |
| Sulphur (ppm) | 1 | 1 | 1 | 2 | 3 | 2 | 3 | <1 | <1 |
| Chlorine (ppm) | 6 | 7 | 2 | 4 | 14 | 12 | 8 | 3 | 4 |

Catalyst
a = Ni (55 wt.%) on inert support, Harshaw Ni 6458 P
b = Pd (10 wt.%) on carbon, Janssen Chimica 20569-9

**Claims**

1. A process for the production of petroleum resins comprising copolymerising using a Friedel Crafts catalyst a mixture of:
(i) 5 to 75 wt.% of a feed comprising C$_5$ olefins and/or diolefins, and/or C$_6$ olefins and/or diolefins or a mixture of C$_5$ and C$_6$ olefins and/or diolefins;
(ii) 5 to 55 wt.% of a terpene, and
(iii) 3 to 55 wt.% of an olefinically unsaturated aromatic compound
said mixture containing less than 2 wt.% of cyclopentadiene or dicyclopentadiene and hydrogenating the resulting product to an extent that at least 20% of the aromaticity of the resulting product remains after hydrogenation having regard to the aromaticity before hydrogenation.

2. A process according to claim 1 in which, the resulting product is hydrogenated to an extent that at least 50% of its aromaticity remains having regard for the aromaticity before hydrogenation.

3. A process according to claim 1 or claim 2 in which the resulting product is hydrogenated so that the aromaticity is 3 to 75%.

4. A process according to any of the preceding claims in which additional branched olefins are included in the feed.

5. A process according to claim 4 in which up to 50 wt.% based on the total weight of unsaturated compounds of C$_5$ to C$_8$ branched olefins are included.

6. Petroleum resins produced by copolymerising using a Friedel Crafts catalyst a mixture of:
(i) 5 to 75 wt.% of a feed comprising C$_5$ olefins and/diolefins, and/or C$_6$ olefins and/or diolefins or a mixture of C$_5$ and C$_6$ olefins and/or diolefins;
(ii) 5 to 55 wt.% of terpene, and
(iii) 3 to 55 wt.% of an olefinically unsaturated aromatic compound
said mixture containing less than 2 wt.% of cyclopentadiene or dicyclopentadiene and hydrogenating the resulting product to an extent that at least 20% of the aromaticity remains after hydrogenation having regard to the aromaticity before hydrogenation.

7. Petroleum resins according to claim 6 in which the product is hydrogenated to an extent that at least 50% of the aromaticity remains after hydrogenation having regard to the aromaticity before hydrogenation.

8. Petroleum resins according to claim 6 or claim 7 in which additional branched olefins are included in the feed.

9. Petroleum resins according to claim 8 in which up to 50 wt.% based on the total weight of unsaturated compounds of C$_5$ to C$_8$ branched olefins are included.

10. A hydrogenated derivative of a petroleum resin comprising a copolymer containing from 5 to 80 wt.% of units derived from an olefinically unsaturated aromatic compound from 5 to 80 wt.% of units derived from C$_5$ olefins and/or diolefins and/or C$_6$ olefins and/or diolefins or a mixture of C$_5$ and C$_6$ olefins

and/or diolefins – and from 7 to 45 wt.% of units derived from a terpene  hydrogenated to an extent that at least 20% of the aromaticity remains having regard to the aromaticity before hydrogenation.

11. A hydrogenated resin according to claim 10 which has an aromaticity  of from 3 to 75 wt.%.

12. A resin according to claim 10 or claim 11 having a softening point in the range 60°C to 125°C.

13. A resin according to any of claims 10 to 12 having a number average molecular weight of from 300 to 1500 as measured by GPC.

14. A resin according to any of claims 10 to 13 having a Gardner colour in  the  range  1 to 3, preferably down to saybolt 30.

15. The use of a resin according to any of claims 6 to 14 as a tackifier in an adhesive system.

16. The use according to claim 15 in a hot melt adhesive.

17. The use according to claim 15 in a pressure sensitive adhesive.

## Patentansprüche

1. Verfahren zur Herstellung von Erdölharzen, umfassend die Copolymerisation unter Einsatz eines Friedel- Crafts-Katalysators eines Gemisches aus:

(i) 5 bis 75 Gew.-% einer Beschickung, die $C_5$-Olefine und/oder -Diolefine und/oder $C_6$-Olefine und/oder -Diolefine oder ein Gemisch aus $C_5$- und $C_6$-Olefinen und/oder -Diolefinen umfaßt,

(ii) 5 bis 55 Gew.-% eines Terpens und

(iii) 3 bis 55 Gew.-% einer olefinisch ungesättigten, aromatischen Verbindung,

wobei dieses Gemisch weniger als 2 Gew.-% Cyclopentadien oder Dicyclopentadien enthält und die Hydrierung des erhaltenen Produktes bis zu einem Ausmaß, daß mindestens 20% der Aromatizität des erhaltenen Produktes nach der Hydrierung, bezogen auf die Aromatizität vor der Hydrierung, erhalten bleibt.

2. Verfahren nach Anspruch 1, worin das erhaltene Produkt bis zu einem Ausmaß hydriert wird, daß mindestens 50% seiner Aromatizität, bezogen auf die Aromatizität vor der Hydrierung, erhalten bleibt.

3. Verfahren nach Anspruch 1 oder 2, worin das erhaltene Produkt so hydriert wird, daß seine Aromatizität 3 bis 75% ist.

4. Verfahren nach einem der vorhergehenden Ansprüche, worin zusätzlich verzweigte Olefine in der Beschickung enthalten sind.

5. Verfahren nach Anspruch 4, worin bis zu 50 Gew.-%, bezogen auf das Gesamtgewicht der ungesättigten Verbindungen, $C_5$- bis $C_8$-verzweigte Olefine enthalten sind.

6. Erdölharze, die durch Copolymerisation unter Einsatz eines Friedel-Crafts-Katalysators eines Gemisches aus:

(i) 5 bis 25 Gew.-% einer Beschickung, die $C_5$-Olefine und -Diolefine und/oder $C_6$-Olefine und/oder -Diolefine oder ein Gemisch aus $C_5$- und $C_6$-Olefinen und/oder -Diolefinen umfaßt,

(ii) 5 bis 55 Gew.-% Terpen und

(iii) 3 bis 55 Gew.-% einer olefinisch ungesättigten aromatischen Verbindung,

worin das Gemisch weniger als 2 Gew.-% Cyclopentadien und Dicyclopentadien enthält, und durch Hydrierung des erhaltenen Produkts bis zu einem Ausmaß hergestellt werden, daß mindestens 20% der Aromatizität nach der Hydrierung, bezogen auf die Aromatizität vor der Hydrierung, erhalten bleibt.

7. Erdölharze nach Anspruch 6, worin das Produkt bis zu einem Ausmaß hydriert wird, daß mindestens 50% der Aromatizität nach der Hydrierung, bezogen auf die Aromatizität vor der Hydrierung, erhalten bleibt.

8. Erdölharze nach Anspruch 6 oder 7, worin zusätzlich verzweigte Olefine in der Beschickung enthalten sind.

9. Erdölharze nach Anspruch 8, worin bis zu 50 Gew.-%, bezogen auf das Gesamtgewicht der ungesättigten Verbindungen, $C_5$- bis $C_8$-verzweigte Olefine enthalten sind.

10. Ein hydriertes Derivat eines Erdölharzes umfassend ein Copolymeres, das 5 bis 80 Gew.-% von einer olefinisch ungesättigten, aromatischen Verbindung abgeleitete Einheiten, 5 bis 80 Gew.-% von $C_5$-Olefinen und/oder -Diolefinen und/oder $C_6$-Olefinen und/oder -Diolefinen oder einem Gemisch aus $C_5$- und $C_6$-Olefinen und/oder -Diolefinen abgeleiteten Einheiten – und 7 bis 45 Gew.-% von einem Terpen abgeleitete Einheiten, das bis zu einem Ausmaß hydriert worden ist, daß mindestens 20% der Aromatizität, bezogen auf die Aromatizität vor der Hydrierung, erhalten geblieben sind, enthält.

11. Ein hydriertes Harz nach Anspruch 10, das eine Aromatizität von 3 bis 75 Gew.-% hat.

12. Ein Harz nach Anspruch 10 oder 11, das einen Erweichungspunkt im Bereich von 60°C bis 125°C hat.

13. Ein Harz nach einem der Ansprüche 10 bis 12, das ein Zahlenmittel des Molekulargewichts von 300 bis 1500, gemessen mittels GPC, hat.

14. Ein Harz nach einem der Ansprüche 10 bis 13, das eine Gardner-Farbzahl im Bereich von 1 bis 3 hat.

15. Verwendung eines Harzes nach einem der Ansprüche 6 bis 14 als Klebrigmacher in einem Klebstoffsystem.

16. Verwendung nach Anspruch 15 in einem Schmelzkleber.

17. Verwendung nach Anspruch 15 in einem Selbstkleber.

**Revendications**

1. Procédé de production de résines de pétrole, qui consiste à copolymériser, en utilisant un catalyseur de Friedel-Crafts, un mélange
(i) de 5 à 75% en poids d'une charge comprenant des oléfines et/ou des dioléfines en $C_5$ et/ou des oléfines et/ou des dioléfines en $C_6$ ou un mélange d'oléfines et/ou de dioléfines en $C_5$ et $C_6$;
(ii) de 5 à 55% en poids d'un terpène, et
(iii) de 3 à 55% en poids d'un composé aromatique à non-saturation oléfinique,
ledit mélange contenant moins de 2% en poids de cyclopentadiène ou de dicyclopentadiène, et à hydrogéner le produit résultant dans une proportion telle qu'au moins 20% de l'aromaticité du produit résultant subsistent après l'hydrogénation, compte tenu de l'aromaticité avant l'hydrogénation.

2. Procédé suivant la revendication 1, dans lequel le produit résultant est hydrogéné dans une mesure telle qu'au moins 50% de son aromaticité subsistent, compte tenu de l'aromaticité avant hydrogénation.

3. Procédé suivant la revendication 1 ou la revendication 2, dans lequel le produit résultant est hydrogéné de manière que l'aromaticité se situe entre 3 et 75%.

4. Procédé suivant l'une quelconque des revendications précédentes, dans lequel d'autres oléfines ramifiées sont incluses dans la charge.

5. Procédé suivant la revendication 4, dans lequel sont inclus jusqu'à 50% en poids, sur la base du poids total de composés non saturés, d'oléfines ramifiées en $C_5$ à $C_8$.

6. Résines de pétrole produites par copolymérisation, en présence d'un catalyseur de Friedel-Crafts, d'un mélange:
(i) de 5 à 75% en poids d'une charge comprenant des oléfines et/ou des dioléfines en $C_5$ et/ou des oléfines et/ou des dioléfines en $C_6$ ou un mélange d'oléfines et/ou de dioléfines en $C_5$ et $C_6$;
(ii) de 5 à 55% en poids de terpène, et
(iii) de 3 à 55% en poids d'un composé aromatique à non-saturation oléfinique,
ledit mélange contenant moins de 2% en poids de cyclopentadiène ou de dicyclopentadiène, et à hydrogéner le produit résultant dans une mesure telle qu'au moins 20% de l'aromaticité subsistent après hydrogénation, compte tenu de l'aromaticité avant hydrogénation.

7. Résines de pétrole suivant la revendication 6, dans lesquelles le produit est hydrogéné dans une mesure telle qu'au moins 50% de l'aromaticité subsistent après hydrogénation, compte tenu de l'aromaticité avant hydrogénation.

8. Résines de pétrole suivant la revendication 6 ou la revendication 7, dans lesquelles d'autres oléfines ramifiées sont incluses dans la charge.

9. Résines de pétrole suivant la revendication 8, dans lesquelles sont inclus jusqu'à 50% en poids, sur la base du poids total de composés non saturés, d'oléfines ramifiées en $C_5$ a $C_8$.

10. Dérivé hydrogéné d'une résine de pétrole comprenant un copolymère contenant 5 a 80% en poids de motifs dérivés d'un composé aromatique à non-saturation oléfinique, 5 à 80% en poids de motifs dérivés d'oléfines et/ou de dioléfines en $C_5$ et/ou d'oléfines et/ou de dioléfines en $C_6$ ou d'un mélange d'oléfines et/ou de dioléfines en $C_5$ et $C_6$, et 7 à 45% en poids de motifs dérivés d'un terpène, hydrogène dans une mesure telle qu'au moins 20% de l'aromaticité subsistent, compte tenu de l'aromaticité avant hydrogénation.

11. Résine hydrogénée suivant la revendication 10, ayant une aromaticité de 3 à 75% en poids.

12. Résine suivant la revendication 10 ou la revendication 11, ayant un point de ramollissement dans la plage de 60 à 125°C.

13. Résine suivant l'une quelconque des revendications 10 à 12, ayant une moyenne en nombre du poids moléculaire de 300 à 1500, mesurée par chromatographie en phase gazeuse.

14. Résine suivant l'une quelconque des revendications 10 à 13, ayant une couleur Gardner dans la plage de 1 à 3, s'abaissant de préférence jusqu'à une valeur Saybolt égale à 30.

15. Utilisation d'une résine suivant l'une quelconque des revendications 6 à 14 comme agent d'adhésivité dans une composition adhésive.

16. Utilisation suivant la revendication 15 dans un adhésif thermofusible.

17. Utilisation suivant la revendication 15 dans un adhésif sensible à la pression.